# EUROPEAN PATENT APPLICATION

(11) **EP 4 737 692 A1**
(43) Date of publication of application: **06.05.2026**
(21) Application number: 24209376.3
(22) Date of filing: 29.10.2024
(51) Int. Cl.: F01D 11/04, F01D 15/10, F02C 3/20, F02C 3/34, F02C 7/28

(54) **METHOD OF OPERATING A SUPER-CRITICAL CO2 POWER PLANT AND SUPER-CRITICAL CO2 POWER PLANT**

(71) Applicant: Siemens Energy, Inc., Orlando, FL 32826 (US)
(72) Inventor: Terwey, Bernd, 48653 Coesfeld (DE); Pieper, Norbert, 46535 Dinslaken (DE); Jonshagen, Klas, Orlando, 32828 (US)
(74) Representative: Roth, Thomas

(57) **Abstract**

The invention relates to a method of operating a supercritical CO2 power plant (1) comprising a combustor (3) and a gas turbine (4) having a turbine shaft (9) sealed against a turbine housing (11) in at least two sealing sections (10) by several shaft seals (12, 13, 14, 15), in particular non-contacting shaft seals, the method including the steps of burning a gaseous fuel with oxygen and a CO₂ working fluid in the combustor (3) and expanding the exhaust gas in the gas turbine (4), characterized in that a seal steam is fed to the gas turbine (4) to avoid that CO2 can leave the turbine housing (11) into the atmospheric environment (17) and to avoid that ambient air can enter the turbine housing (11), wherein the seal steam is water steam.

## Description

The invention relates to a method of operating a super-critical CO2 power plant comprising a gas turbine having a turbine shaft sealed against a turbine housing in at least two sealing sections by several shaft seals, in particular non-contacting shaft seals, the method including the step of expanding a hot and pressurized CO2 working fluid in the gas turbine.

As an alternative to water-steam-cycles there are concepts using CO2 as a working fluid for thermal cycles in power plants. The main advantages of using CO2 are the more compact design of the turbomachinery due to the higher density of the fluid and the reduced complexity of the cycle. In these cycles CO2 may be used for waste heat recovery or with internal combustion with pure oxygen. In the case of internal combustion, the CO2 is a product and thus the surplus can be captured for subsequent sequestration or usage of CO2. The leakage of CO2 from a turbine through the shaft seals in this context is disadvantageous for the capture rate. In both cases it is important to avoid or reduce the CO2 leakage at the outermost rotor-stator seals near the radial bearings of the turbine.

The leakage of hot CO2 gas can pose a safety risk due to its high temperature, which can potentially cause burns.

Moreover, CO2 is a hazardous substance. In high concentrations, it can displace oxygen in the air, leading to an increased risk of asphyxiation for people in the vicinity. It is also a greenhouse gas that contributes to global warming.

Furthermore, CO2, when captured, can be utilized for various industrial purposes, such as in the food and beverage industry for carbonation, in enhanced oil recovery operations, or even as a raw material for producing fuels and chemicals. Therefore, preventing CO2 leakage ensures that this valuable resource is not wasted.

In a typical steam turbine with non-contacting outer seals, seal steam is managed across multiple interstage chambers, with the final chamber, known as gland steam, operating under vacuum conditions maintained by the condenser. This vacuum draws in ambient air, mixing it with the steam.

However, for a CO2 turbine, such ingress of ambient air is problematic as it contains gases like oxygen and nitrogen that cannot be recompressed and reintroduced into the cycle without contaminating the CO2 working fluid.

Starting from this prior art it is an object of the present invention to provide an optimized method of the above-mentioned kind.

In order to solve this object the present invention provides a Method of operating a super-critical CO2 power plant comprising a gas turbine having a turbine shaft sealed against a turbine housing in at least two sealing sections by several shaft seals, in particular non-contacting shaft seals, the method including the step of expanding a hot and pressurized CO2 working fluid in the gas turbine, characterized in that a seal steam is fed to the gas turbine to avoid that CO2 can leave the turbine housing into the atmospheric environment and to avoid that ambient air can enter the turbine housing, wherein the seal steam is water steam. The introduced seal steam prevents ambient air from entering the turbine housing through the at least one sealing section and contaminating the exhaust gas. Moreover, the seal steam prevents exhaust gas from leaving the turbine housing. The behaviour of shaft seals with water steam is well understood, allowing for reliable operation based on established steam turbine practices.

Preferably, the CO2 working fluid has a share of CO2 larger than 85% by mass.

The seal steam can be introduced into an annular chamber provided between two shaft seals, preferably between two inner shaft seals.

Alternatively or additionally, the seal steam can be introduced into an annular chamber directly upstream of at least one sealing section. In this case, a separation barrier is preferably used to maintain the integrity of the system.

Preferably, the introduced seal steam has a pressure, which is higher than the pressure within a chamber of the gas turbine arranged in an inward direction directly next to the annual chamber into which the seal steam is introduced. This higher pressure ensures that no CO2 can leave the turbine hosing potentially enabling a 100% CO2 capture rate and enhancing CO2 storage efficiency. Rather, a small proportion of the seal steam will enter the turbine housing and mix with the exhaust gas. However, this is not a problem as the water steam can be easily separated from the exhaust gas at the cold end of the cycle.

A pressure within an annular chamber between two outer shaft seals of a sealing section is preferably kept below the pressure of atmospheric environment in order to prevent a leakage of seal steam through the outermost shaft seal.

Preferably, the CO2 working fluid is heated before expansion using a combustor or a heat exchanger. The heat exchanger can, for example, be operated with the waste heat from another gas turbine process or a chemical process.

According to one embodiment of the present invention the method comprises the further steps of cooling the exhaust gas in a heat exchanger, separating the water contained in the exhaust gas in a condenser, compressing the remaining exhaust gas in a compressor, returning at least a part of the exhaust gas to the combustor/heat exchanger via the heat exchanger.

Moreover, the method according to the present invention can comprise the further step of discharging at least a part of the exhaust gas leaving the compressor for further use.

Preferably, water separated in the condenser is superheated, in particular in the heat exchanger, and is reintroduced in the gas turbine as seal steam.

Moreover, the present invention provides Super-critical CO2 power plant comprising a gas turbine designed to be operated with CO2 as a working fluid, wherein the gas turbine comprises a turbine housing, a turbine shaft extending through the turbine housing and at least two sealing sections sealing the turbine shaft against the turbine housing, each of said sealing sections (10) comprising several shaft seals, characterized in that the super-critical CO2 power plant comprises a water steam source fluidly connected to at least one chamber arranged within at least one of the sealing sections, wherein the at least one chamber is preferably positioned between two inner shaft seals of the at least one sealing section, or to at least one chamber of the gas turbine arranged directly next to at least one of the sealing sections in an inward direction.

Preferably, the water steam source comprises a condenser designed and arranged for separating water from exhaust gas of the gas turbine, and a heat exchanger fluidly connected to the condenser to heat water coming from the condenser.

According to one embodiment, at least one sealing section is provided with an annular chamber fluidly connected to a vacuum source. The vacuum may be created by cooling the water steam and air in a cooler to condense the steam and drain the water, and to a fan leading the remaining air to atmosphere..

Preferably, the super-critical CO2 power plant comprises a heat exchanger fluidly connected to the downstream end of the gas turbine to receive and cool the exhaust gas of the gas turbine, a condenser fluidly connected to the heat exchanger and designed for separating water from the exhaust gas, a compressor fluidly connected to the condenser to receive CO2 from the condenser, wherein the compressor is fluidly connected to the combustor, preferably via the heat exchanger.

For heating the working fluid before its expansion within the gas turbine the super-critical CO2 power plant can comprise a combustor or a heat exchanger. In the case of a heat exchanger, the heat exchanger can be operated with the waste heat from another gas turbine process or a chemical process.

Further features and advantages of the present invention will become apparent from the following description referring to the accompanying drawing. In the drawing
Figure 1 is a schematic view of a super-critical CO2 power plant according to an embodiment of the present invention,
Figure 2 is a schematic partial sectional view of a turbine in the region of one of at least two sealing sections sealing a turbine shaft against a turbine housing, and
Figure 3 is a schematic view of a super-critical CO2 power plant according to a second embodiment of the present invention.

In the following same reference numerals denote same or similar components or parts of components.

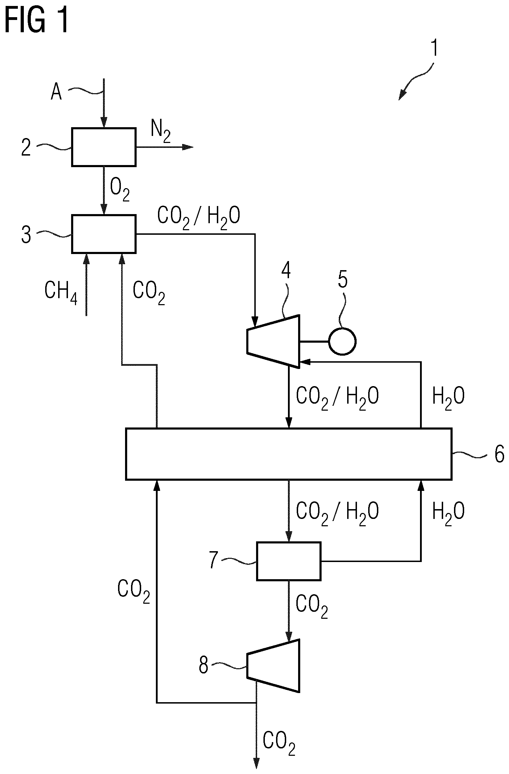

Figure 1 shows a turbine plant 1 according to an embodiment according to the present invention. The turbine plant 1 comprises as main components an air separator 2, a combustor 3, a gas turbine 4, a generator 5, a heat exchanger 6, a condenser 7, and a compressor 8.

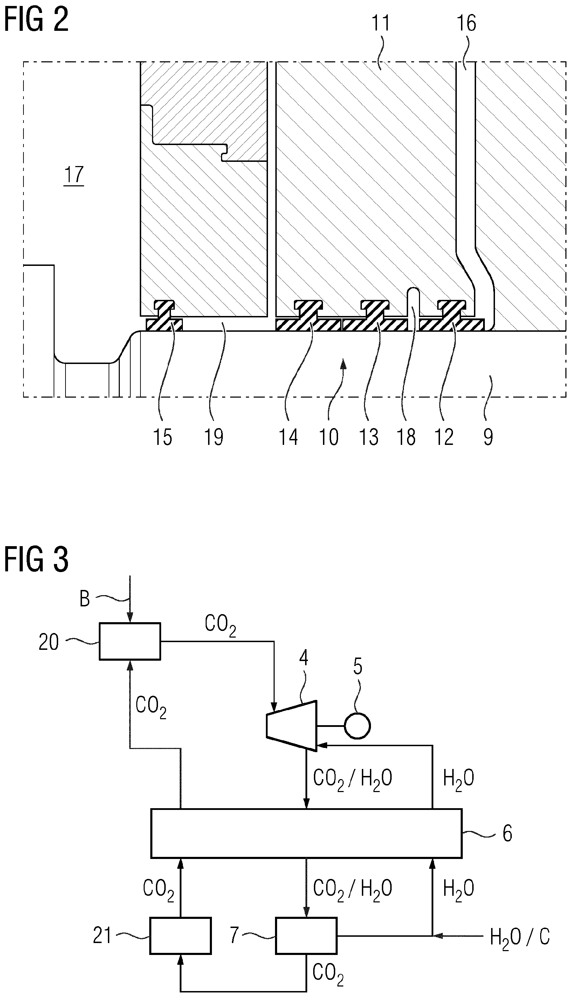

During the operation of the turbine plant 1 ambient air represented by arrow A is separated into nitrogen and oxygen within the air separator 2, e.g. using a cryogenic air separation technology. The nitrogen may be used to cool the cold side of the heat exchanger 6. The oxygen is led to the combustor 3, where it is burned together with a gaseous fuel and a CO₂ working fluid, wherein the working fluid preferably has a share of CO2 larger than 85% by mass. In the present case, the arising exhaust gas diluted with recycled CO2-stream, which mainly contains CO2 and water, has a temperature of about 1100°C and a pressure of about 300 bar. It is led to the gas turbine 4, where it is expanded to a pressure of about 30 bar. Please note that temperatures and pressure can vary depending on the design and operating mode of the combustor 3 and the gas turbine 4. A turbine shaft 9 drives the generator 5 that converts the mechanical energy into electrical energy. The exhaust gas is then cooled in the heat exchanger 6 and thereafter fed to the condenser 7, where the water contained in the exhaust gas is separated. The dewatered exhaust gas, which essentially consists of CO2, is then compressed in the compressor 8. In the compressed state, a first part of the CO2 is fed back to the heat exchanger 6, where it is heated and returned to the combustor 3. The second part of the CO2 can be captured for subsequent sequestration of CO2 or usage. The water separated in the condenser 7 is superheated in the heat exchanger 6 and used as sealing steam, as described in more detail below with reference to figure 2.

Figure 2 shows a part of the gas turbine 4 in the area of a sealing section 10 that seals the turbine shaft 9 against a turbine housing 11. In the present case the sealing section 10 comprises four shaft seals 12, 13, 14 and 15, which are preferably non-contacting shaft seals, such as labyrinth seals or the like. In the figure to the right of the sealing section 10, marked by the reference number 16, is the downstream end of the turbine housing 11, where the pressure of the expanded exhaust gas is about 30,0 bar. In the figure to the left of the sealing section 10 is the atmospheric environment marked by the reference number 17, which has an ambient pressure of 1,0 bar. An annular chamber 18 is provided between the two inner shaft seals 12 and 13, into which a seal steam, presently the water steam preferably coming from the heat exchanger 6, is fed during operation of the gas turbine 4 at a pressure that is slightly higher than the pressure inside the turbine housing 11 at the innermost shaft seal 12. In this case, the seal steam is fed in at a pressure of 30.1 bar. The pressure within a further annular chamber 19 provided between the two outer shaft seals 14 and 15 is kept slightly below the ambient pressure, e.g. at 0,9 bar. This vacuum is preferably produced by a cooled gland steam condenser where the steam is converted to water and the remaining air is passing a fan and led to atmosphere 17. Alternatively, a separate vacuum source may be used.

During the operation of the gas turbine 4 the seal steam introduced into chamber 18 at a pressure of 40,1 bar avoids that CO2 can leave the turbine housing 11 into the atmospheric environment 17 and that ambient air can pass the sealing section 10, enter the turbine housing 11 and contaminate the working fluid. Due to its overpressure some small amount of the seal steam will pass the innermost shaft seal 12 and enter the working fluid. This water steam will be separated in the condenser 7 together with the water steam generated by the combustion.

Several advantages are achieved thanks to the use of water steam as seal steam. The introduced seal steam prevents ambient air from entering the turbine housing 11 through the sealing section 10 and contaminating the exhaust gas. Accordingly, the CO2 leaving compressor 8 is ready for reuse in the combustor 3, for storage or for further use. Moreover, the seal steam prevents exhaust gas from leaving the turbine housing 11, which is desirable in view of safety. The behaviour of shaft seals with water steam is well understood, allowing for reliable operation based on established steam turbine practices. The use of a gland steam condenser can naturally create the necessary vacuum for the annular chamber 19 next to the outermost shaft seal 15. Thanks to the recirculation of CO2, no CO2 feed stream is required to compensate the losses at the turbine shaft 9.

While figure 1 shows a super-critical CO2 power plant 1, which is fired by a combustor 3, figure 3 shows a further unfired super-critical CO2 power plant 1 as used e.g. in a waste heat recovery process. Here, CO2 enters a heat exchanger 20 operated with waste heat form another gas turbine or chemical process represented by arrow B. The CO2 is superheated and leaves the heat exchanger 20 with a temperature of about 280 bar and a temperature of about 500°C, just to give an example. The Co2 is expanded in the gas turbine 4 to drive generator 5. The CO2 leaves the gas turbine with a temperature of about 330°C and a pressure of about 60 bar. The CO2 is fed to the heat exchanger 6 to reduce its temperature to about 60°C. Thereafter, the CO2 is led to the condenser 7 and to pump 21. Thereafter, the CO2 having a temperature of about 40° us superheated in the heat exchanger 6 and redirected to the heat exchanger 20. As described for the first embodiment with reference to figures 1 and 2, also the gas turbine 4 shown in figure 3 is purged with a seal steam to avoid that CO2 can leave the turbine housing 11 into the atmospheric environment 17 and to avoid that ambient air can enter the turbine housing 11, wherein the seal steam is water steam. In case the water which is extracted downstream of the heat exchanger 6 is not sufficient to seal the sealing sections 10, because some water is lost to the gland steam condenser (not shown) or even to the atmospheric environment 17, external water can be fed as indicated by arrow C.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Regardless of the grammatical gender of a particular term, persons with male, female, or other gender identity are included.

## Claims

1. Method of operating a super-critical CO2 power plant (1) comprising a gas turbine (4) having a turbine shaft (9) sealed against a turbine housing (11) in at least two sealing sections (10) by several shaft seals (12, 13, 14, 15), in particular non-contacting shaft seals, the method including the step of expanding a hot and pressurized CO2 working fluid in the gas turbine (4),
**characterized in that** a seal steam is fed to the gas turbine (4) to avoid that CO2 can leave the turbine housing (11) into the atmospheric environment (17) and to avoid that ambient air can enter the turbine housing (11), wherein the seal steam is water steam.

2. Method according to claim 1, **characterized in that** the CO2 working fluid has a share of CO2 larger than 85% by mass.

3. Method according to claim 1 or 2, **characterized in that** the seal steam is introduced into an annular chamber (18) provided between two shaft seals (12, 13), in particular provided between two inner shaft seals (12, 13) .

4. Method according to claim 1 or 2, **characterized in that** the seal steam is introduced into an annular chamber directly upstream of at least one sealing section (10).

5. Method according to claim 3 or 4, **characterized in that** the introduced seal steam has a pressure, which is higher than the pressure within a chamber of the gas turbine (4) arranged in an inward direction directly next to the annual chamber (18) into which the seal steam is introduced.

6. Method according to one of the foregoing claims, **characterized in that** a pressure within an annular chamber (19) between two outermost shaft seals (14, 15) of a sealing section (10) is kept below the pressure of atmospheric environment (17).

7. Method according to one of the foregoing claims, **characterized in that** the CO2 working fluid is heated before expansion using a combustor (3) or a heat exchanger (20).

8. Method according to claim 7, **characterized by** the further steps of cooling the exhaust gas in a heat exchanger (6), separating the water contained in the exhaust gas in a condenser (7), compressing the remaining exhaust gas in a compressor (8), returning at least a part of the exhaust gas to the combustor (3) or to the heat exchanger (20) via the heat exchanger (6).

9. Method according to claim 8, **characterized by** the further step of discharging at least a part of the exhaust gas leaving the compressor (8) for further use.

10. Method according to claim 7 or 8, **characterized in that** water separated in the condenser (7) is superheated, in particular in the heat exchanger (6), and is reintroduced in the gas turbine (4) as seal steam.

11. Super-critical CO2 power plant (1) comprising a gas turbine (4) designed to be operated with CO2 as a working fluid, wherein the gas turbine (4) comprises a turbine housing (11), a turbine shaft (9) extending through the turbine housing (11) and at least two sealing sections (10) sealing the turbine shaft (9) against the turbine housing (11), each of said sealing sections (10) comprising several shaft seals (12, 13, 14, 15), **characterized in that** the super-critical CO2 power plant (1) comprises a water steam source fluidly connected to at least one chamber arranged within at least one of the sealing sections (10), wherein the at least one chamber (18) is preferably positioned between two inner shaft seals (12, 13) of the at least one sealing section (10), or to at least one chamber of the gas turbine arranged directly next to at least one of the sealing sections (10) in an inward direction.

12. Super-critical CO2 power plant (1) according to claim 11, **characterized in that** the water steam source comprises a condenser (7) designed and arranged for separating water from exhaust gas of the gas turbine (4), and a heat exchanger (6) fluidly connected to the condenser (7) to heat water coming from the condenser (7) .

13. Super-critical CO2 power plant (1) according to one of claims 11 or 12, **characterized in that** at least one sealing section (10) is provided with an annular chamber (19) fluidly connected to a vacuum source of the super-critical CO2 power plant (1).

14. Super-critical CO2 power plant (1) according to one of claims 11 to 13, **characterized in that** it comprises a heat exchanger (6) fluidly connected to the downstream end of the gas turbine (4) to receive and cool the exhaust gas of the gas turbine (4), a condenser (7) fluidly connected to the heat exchanger (6) and designed for separating water from the exhaust gas, a compressor (8) fluidly connected to the condenser (7) to receive CO2 from the condenser (7), wherein the compressor (8) is fluidly connected to the combustor (3), preferably via the heat exchanger (6).
